# FASCICULE DE BREVET EUROPEEN

(11) **EP 0 963 127 B1**
(45) Date de publication et mention de la délivrance du brevet: **23.05.2007**
(21) Numéro de dépôt: 99401230.0
(22) Date de dépôt: 21.05.1999
(51) Int. Cl.: H04Q 7/22, H04Q 7/38, H04B 7/26

(54) **ALLOCATION DE RESSOURCES RADIO DANS UN SYSTÈME CELLULAIRE MULTISERVICES**
FUNKKAPAZITÄTSZUWEISUNG IN EINEM MEHRDIENSTZELLULARSYSTEM
RADIO RESOURCE ALLOCATION IN A MULTISERVICE CELLULAR SYSTEM

(30) Priorité: 04.06.1998 FR 9807011
(43) Date de publication de la demande: 08.12.1999
(73) Titulaire: Alcatel Lucent, 75008 Paris (FR)
(72) Inventeur: Roberts, Michael, 92200 Neuilly sur Seine (FR)
(74) Mandataire: El Manouni, Josiane

(56) Documents cités:
- EP-A- 0 571 745
- WO-A-95/31878
- GB-A- 2 301 992
- STERN H P ET AL: "DESIGN AND PERFORMANCE ANALYSIS OF AN ADVANCED, NARROWBAND INTEGRATED VOICE/DATA MOBILE RADIO SYSTEM" IEEE TRANSACTIONS ON COMMUNICATIONS, vol. 43, no. 1, 1 janvier 1995 (1995-01-01), pages 107-115, XP000487378

## Description

La présente invention concerne d'une manière générale les systèmes cellulaires de radiocommunications mobiles.

La présente invention concerne plus particulièrement les évolutions de ces systèmes liées à l'introduction de nouveaux services, notamment de type multimedia.

De nouveaux services de données à haut débit sont actuellement introduits dans les systèmes cellulaires de radiocommunications mobiles dits de deuxième génération tels que notamment le système GSM (pour "Global System for Mobile Communication"), en plus des services de voix et des services de données à faible et à moyen débit déjà fournis par ces systèmes. A titre d'exemple de tels services de données à haut débit on peut citer les services de données en mode circuit tels que le service HSCSD (pour "High Speed Circuit Switched Data"), ou les services de données en mode paquet tels que le service GPRS (pour "General Packet Radio Service").

Parallèlement, une évolution est en cours vers des systèmes dits de troisième génération, notamment le système UMTS (pour "Universal Mobile Telecommunication System"), autorisant des débits encore plus élevés.

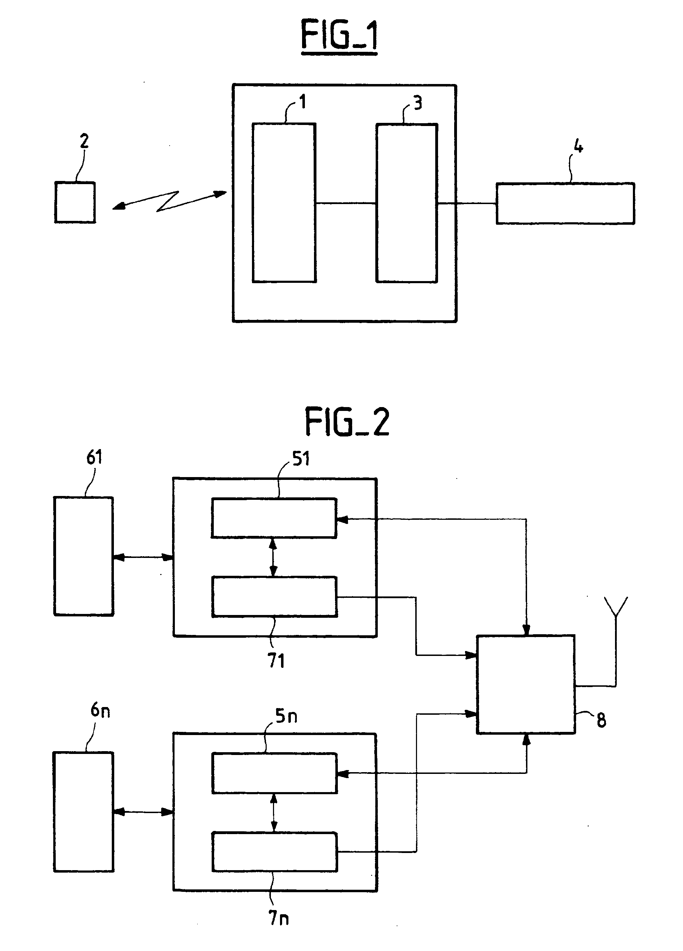

D'une manière générale, un système cellulaire de radiocommunications mobiles peut être représenté comme comportant, comme illustré à la figure 1, un réseau cellulaire de radiocommunications mobiles comportant lui-même un sous-système d'accès radio 1, chargé essentiellement de la gestion des ressources radio et de l'interface avec des stations mobiles 2, et un sous-système de réseau 3, chargé essentiellement de la gestion des communications et de l'interface avec des réseaux extérieurs 4 tels que notamment les réseaux PSTN (pour "Public Switched Telephone Network"), ISDN (pour "Integrated Services Digital Network"), ... etc.

D'une manière générale, dans un système cellulaire de radiocommunications mobiles, des ressources radio sont allouées dynamiquement aux stations mobiles en fonction de leurs besoins. Plus précisément, les ressources radio allouées à une station mobile pour un service donné sont sélectionnées par le sous-système d'accès radio parmi un ensemble de ressources attribuées à une cellule donnée. Cette cellule donnée est sélectionnée ou resélectionnée par le sous-système d'accès radio, en coopération avec la station mobile, avec selon le cas une plus ou moins grande autonomie de la station mobile, ou, ce qui revient au même un plus ou moins grand degré de contrôle par le système, dans cette coopération. Les divers critères de sélection utilisés comportent notamment les besoins en ressources de la station mobile pour le service considéré, les disponibilités en ressources dans différentes cellules supportant ce service, et des résultats de mesures radio pour ces différentes cellules, pour ce service.

Les ressources attribuées à une cellule sont en outre déterminées suivant les principes connus de répartition de ressources entre cellules dans un réseau cellulaire, et sont en outre réparties, de manière fixe ou dynamique, entre les différents services supportés par cette cellule.

Par ailleurs, dans un système cellulaire de radiocommunications mobiles, les ressources radio sont formées par des canaux de transmission dits à accès multiple, notamment selon des techniques de multiplexage mixte incluant un multiplexage fréquentiel. Par exemple, dans un système tel que le système GSM, un tel multiplexage mixte inclut un multiplexage fréquentiel et un multiplexage temporel, un canal de transmission étant dans ce cas défini par un intervalle de temps donné d'un multiplex temporel porté par une fréquence porteuse donnée.

Un problème se pose dans le cas d'une station mobile accédant simultanément à plusieurs services, qui est que la cellule sélectionnée, et donc la fréquence ainsi allouée à cette station mobile, peut être différente pour ces différents services, auquel cas une telle station mobile doit être équipée de moyens d'émission-réception radio aptes à commuter très rapidement d'une fréquence à une autre, voire d'émettre ou de recevoir simultanément sur des fréquences différentes. De telles stations mobiles ont pour inconvénient majeur d'être relativement complexes et donc coûteuses.

La présente invention a notamment pour but d'éviter cet inconvénient.

Le document Stern et All : « Design and performance analysis of an advanced, narrowband intergrated voice/data mobile radio system », vol.43, N° 1, 1 Janvier 1995, pages 107-115, XP00048378 décrit un système radio mobile à bande étroite intégrant voix et données, qui fournit une capacité pour les communications de données, en utilisant les intervalles de silence inhérents à la parole.

Le document GB 2 301 992 décrit un système TDMA dans lequel un intervalle de temps disponible parmi les intervalles de temps de canal de trafic est alloué à des données circuit nouvellement générées, et un intervalle de temps disponible parmi des intervalles de temps de canal de contrôle est alloué à des données paquet nouvellement générées.

La présente invention a ainsi pour objet un système d'allocation de ressources radio à une station mobile dans un système cellulaire de radiocommunications mobiles multiservices dans lequel, pour les différents services, l'allocation de ressources radio est effectuée de manière indépendante, et dans lequel les ressources radio sont formées par des canaux de transmission à accès multiple selon des techniques de multiplexage mixte incluant un multiplexage fréquentiel, ce système étant essentiellement caractérisé en ce qu'il comporte des moyens pour coordonner l'allocation de ressources radio pour différents services auxquels une station mobile accède simultanément, en vue d'allouer à cette station mobile, pour ces différents services, différents canaux de transmission portés par une même fréquence porteuse.

La présente invention a également pour objet une station mobile, et une entité (telle que sous-système d'accès radio)pour système cellulaire de radiocommunications mobiles, utilisables dans un tel système.

D'autres objets et caractéristiques de la présente invention apparaîtront à la lecture de la description suivante d'un exemple de réalisation, faite en relation avec les dessins ci-annexés, dans lesquels:
- la figure 1 rappelle l'architecture générale d'un système cellulaire de radiocommunications mobiles,
- la figure 2 rappelle l'architecture générale des stations mobiles, suivant l'art antérieur, dans un système cellulaire de radiocommunications mobiles multiservices,
- la figure 3 rappelle l'architecture générale du sous-système d'accès radio, suivant l'art antérieur, dans un système cellulaire de radiocommunications mobiles multiservices,
- la figure 4 est destinée à illustrer le type de moyens pouvant être prévus dans les stations mobiles, pour ladite allocation de ressources radio suivant l'invention,
- la figure 5 est destinée à illustrer le type de moyens pouvant être prévus dans le sous-système d'accès radio, pour ladite allocation de ressources radio suivant l'invention.

Comme rappelé sur la figure 2, une station mobile comporte essentiellement, pour chacun des "n" services auxquels elle est susceptible d'accéder:
- des moyens d'émission/réception en bande de base, tels que 51 à 5n, permettant d'une part de mettre des informations issues de moyens d'interface homme-machine propres au service considéré, tels que 61 à 6n, dans une forme admissible pour leur transmission sur l'interface radio, et d'autre part de restituer, pour ces moyens d'interface homme-machine, des informations reçues, dans cette forme, sur cette interface radio,
- des moyens de commande, tels que 71 à 7n, permettant notamment d'émettre et de recevoir les différentes informations de signalisation échangées entre station mobile et réseau, dans les différentes procédures, ou protocoles, prévus pour le fonctionnement d'un tel système, notamment dans la procédure considérée ici d'allocation de ressources radio, et notamment, dans cette procédure:
   -- dans le cas où la sélection de cellule se fait en coopération avec les stations mobiles, d'émettre et de recevoir des informations de signalisation correspondantes,
   -- dans tous les cas, de recevoir des informations de signalisation issues dudit sous-système d'accès radio, et contenant les ressources radio allouées à la station mobile pour ce service.

Comme rappelé également sur la figure 2, les stations mobiles comportent également des moyens 8 d'émission-réception radio, dont la fréquence est commandée en fonction des ressources radio allouées à cette station mobile pour ces différents services.

Comme indiqué plus haut, suivant l'art antérieur ces moyens d'émission-réception radio doivent, dans le cas d'une station mobile apte à accéder simultanément à plusieurs des "n" services, être capables de commuter très rapidement d'une fréquence à une autre, voire d'émettre ou de recevoir simultanément sur des fréquences différentes, d'où les inconvénients déjà cités.

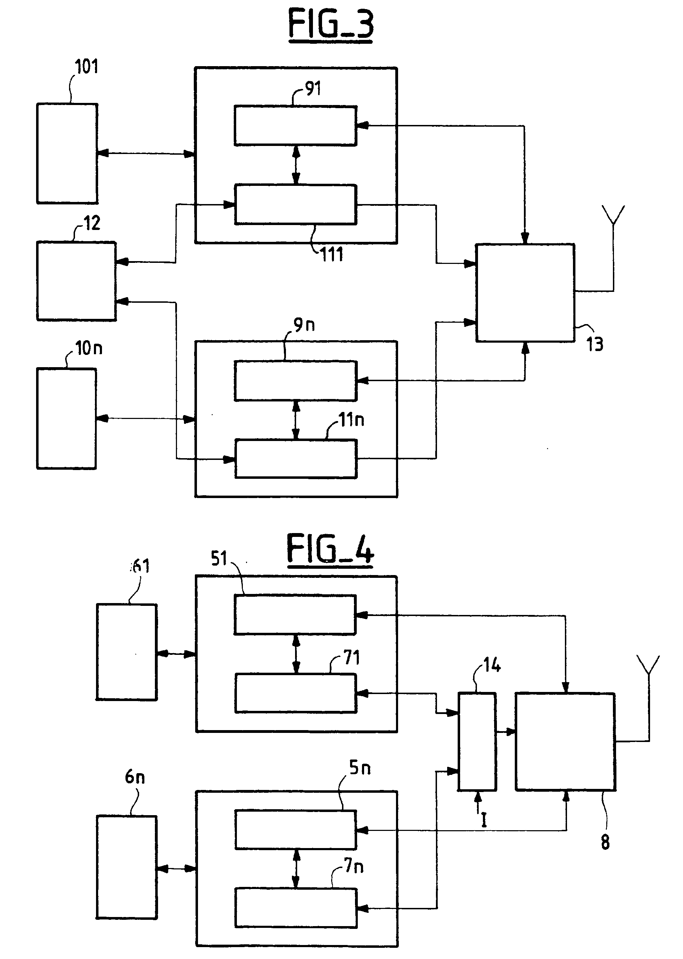

De même, comme rappelé sur la figure 3, le sous-système d'accès radio comporte essentiellement, pour chacun des "n" services supportés par une cellule:
- des moyens d'émission/réception en bande de base, tels que 91 à 9n, permettant d'une part de mettre des informations issues de moyens tels que 101 à 10n d'interface avec le sous-système de réseau, propres au service considéré, dans une forme admissible pour leur transmission sur l'interface radio, et d'autre part de restituer, pour ces moyens d'interface avec le sous-système de réseau, des informations reçues, dans cette forme, sur cette interface radio,
- des moyens de commande, tels que 111 à 11n, permettant notamment d'émettre et de recevoir les différentes informations de signalisation échangées entre station mobile et réseau, dans les différentes procédures, ou protocoles, prévus pour le fonctionnement d'un tel système, notamment dans la procédure considérée ici d'allocation de ressources radio, et notamment, dans cette procédure:
   -- dans le cas où la sélection de cellule se fait en coopération avec les stations mobiles, d'émettre et de recevoir des informations de signalisation correspondantes,
   -- dans tous les cas, d'émettre des informations de signalisation contenant les ressources radio allouées à une station mobile pour un service donné.

Le sous-système d'accès radio comporte en outre des moyens 12 de gestion de ressources radio auxquels les moyens de commande 111 à 11n adressent des requêtes en allocation de ressources radio dans la cellule sélectionnée pour chacun de ces services, et qui indiquent en réponse, à ces moyens de commande, les ressources allouées.

Comme rappelé également sur la figure 3, le sous-système d'accès radio comporte également des moyens 13 d'émission-réception radio, dont la fréquence est commandée en fonction des ressources radio allouées aux stations mobiles.

Pour une description plus complète des systèmes cellulaires de radiocommunications mobiles tels que notamment le système GSM (pour "Global System for Mobile communications" en anglais), on pourra se référer par exemple au livre de M. MOULY et M.B. PAUTET, intitulé "The GSM System for Mobile Communications" (Palaiseau, France, 1992, ISBN:2-9507190-07-7).

Suivant l'invention, des moyens de coordination d'allocation de ressources radio pour différents services auxquels une station mobile accède simultanément sont prévus, afin d'allouer à une telle station mobile, pour ces différents services, différents canaux de transmission portés par une même fréquence porteuse.

D'une manière générale, compte tenu de la répartition de fréquences entre cellules dans un système cellulaire, une condition pour que la fréquence allouée à une même station mobile pour différents services soit la même, pourra être qu'une même cellule soit sélectionnée pour ces différents services; cela pourra notamment être le cas si les cellules réutilisant de mêmes fréquences sont relativement éloignées les unes des autres. Des cellules différentes réutilisant des mêmes fréquences pourront aussi être sélectionnées; cela pourra notamment être le cas si les cellules réutilisant de mêmes fréquences sont relativement proches les unes des autres.

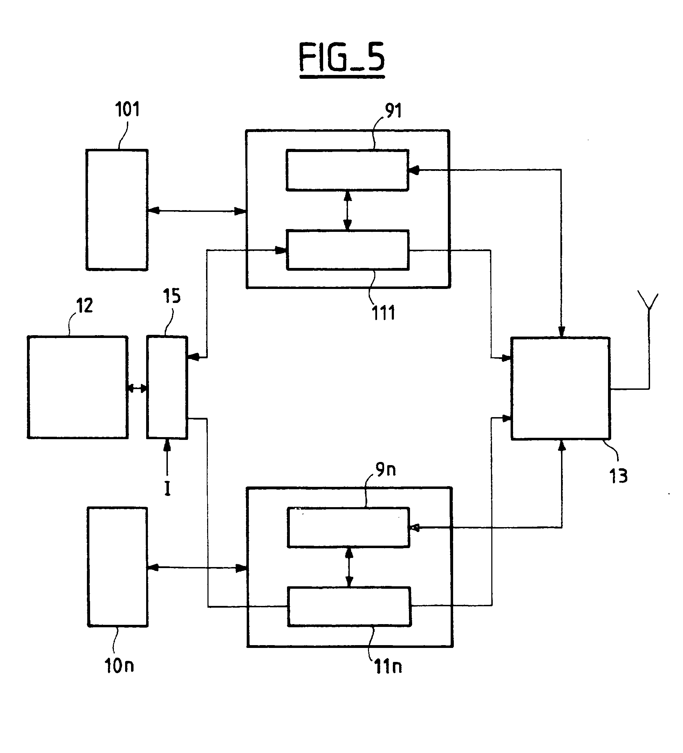

De tels moyens de coordination peuvent en outre être prévus dans les stations mobiles et/ou dans le sous-système d'accès radio, comme illustré sur les figures 4 et 5, où des éléments identiques à ceux illustrés sur les figures 2 et 3 ont par ailleurs été repérés avec les mêmes références.

Dans le cas où la sélection de cellule se fait en coopération avec les stations mobiles, ces moyens de coordination peuvent ainsi être prévus dans les stations mobiles et dans le sous-système d'accès radio, où ils sont notés respectivement 14 et 15. Ils permettent alors, en coopération, de centraliser les différentes informations de signalisation relatives à la sélection de cellule, pour les différents services auxquels une station mobile accède simultanément, en vue de sélectionner, pour ces différents services, une même cellule, ou des cellules différentes réutilisant des mêmes fréquences.

Dans le cas de plus faible degré de coopération avec les stations mobiles, c'est-à-dire dans le cas où la sélection de cellule est faite de manière autonome par le sous-système d'accès radio, les moyens de coordination 15 prévus dans le sous-système d'accès radio permettent de centraliser les différentes informations de signalisation relatives à la sélection de cellule, pour les différents services auxquels une station mobile accède simultanément, en vue de sélectionner, de manière autonome, une telle même cellule, ou de telles cellules différentes réutilisant des mêmes fréquences.

Dans tous les cas, les moyens de coordination 15 prévus dans le sous-système d'accès radio permettent en outre de centraliser les différentes requêtes en allocation de ressources radio dans la ou les cellules ainsi sélectionnées, pour les différents services auxquels accède simultanément une station mobile, et de reformuler ces requêtes, vers les moyens de gestion de ressources radio, en vue d'allouer, pour ces différents services, différents canaux de transmission portés par une même fréquence porteuse.

De tels moyens de coordination 14 et/ou 15 sont en outre commandés par des informations dites de détection de simultanéité de services, notées I, qui peuvent d'une manière générale être générées soit dans les stations mobiles, par détection d'une telle simultanéité de services dans les stations mobiles elles-mêmes, soit dans le sous-système réseau, par détection d'une telle simultanéité de services dans ce sous-système réseau (ce dernier étant en effet l'entité du système chargée de la gestion des communications).

Dans le premier cas, ces informations de détection de simultanéité de services sont communiquées de la station mobile au sous-système d'accès radio, sous forme d'informations de signalisation; dans le deuxième cas ces informations de détection de simultanéité de services sont communiquées du sous-système réseau au sous-système d'accès radio, sous forme d'informations de signalisation, et elles peuvent, selon le cas, c'est-à-dire suivant que la sélection de cellule se fait ou non en coopération avec les stations mobiles, être ou non communiquées aux stations mobiles, également sous forme d'informations de signalisation.

La réalisation particulière des moyens de coordination 14 et/ou 15 ne présentant pas de difficulté particulière pour l'homme du métier, de tels moyens ne nécessitent pas d'être décrits ici de manière plus détaillée que par leur fonction.

Il est par ailleurs à noter que dans tout ce qui précède, le terme de sélection de cellule s'applique aussi bien au cas de sélection de cellule lors de l'accès initial au système, qu'au cas de sélection de cellule lors d'un tranfert de communication intercellulaire (ou "handover" en anglais).

En outre, on notera que la présente invention peut aussi être considérée comme introduisant une nouvelle cause de transfert intercellulaire, due au fait qu'une même cellule, ou des cellules différentes réutilisant de mêmes fréquences, doivent ainsi être sélectionnées pour les différents services auxquels une station mobile accède simultanément.

En outre, les critères utilisés pour une telle sélection de cellule suivant l'invention peuvent a priori être quelconques et laissés à l'appréciation de l'opérateur du système considéré, tels que par exemple:
- recherche d'un meilleur compromis entre les divers critères de sélection utilisés individuellement pour chacun des services,
- minimisation du nombre de transferts intercellulaires ainsi introduits par la présente invention,
- ...etc.

Par ailleurs, il est à noter que la présente invention n'est pas limitée au cas où lesdits canaux de transmission portés par une même fréquence porteuse sont obtenus par multiplexage temporel, mais s'applique à toute autre technique de multiplexage, telle que notamment le multiplexage par codes.

## Revendications

1. Système d'allocation de ressources radio à une station mobile dans un système cellulaire de radiocommunications mobiles multiservices dans lequel, pour les différents services, l'allocation de ressources radio est effectuée de manière indépendante, et dans lequel les ressources radio sont formées par des canaux de transmission à accès multiple selon des techniques de multiplexage mixte incluant un multiplexage fréquentiel, **caractérisé en ce qu'**il comporte des moyens (14, 15) pour coordonner l'allocation de ressources radio pour différents services auxquels une station mobile accède simultanément, en vue d'allouer à cette station mobile, pour ces différents services, différents canaux de transmission portés par une même fréquence porteuse.

2. Station mobile pour système cellulaire de radiocommunications mobiles multiservices dans lequel, pour les différents services, l'allocation de ressources radio est effectuée de manière indépendante, et dans lequel les ressources radio sont formées par des canaux de transmission à accès multiple selon des techniques de multiplexage mixte incluant un multiplexage fréquentiel, **caractérisée en ce qu'**elle comporte des moyens (14) pour coordonner l'allocation de ressources radio pour différents services auxquels une station mobile accède simultanément, en vue d'allouer à cette station mobile, pour ces différents services, différents canaux de transmission portés par une même fréquence porteuse.

3. Entité de sous-système d'accès radio d'un système cellulaire de radiocommunications mobiles multiservices dans lequel, pour les différents services, l'allocation de ressources radio est effectuée de manière indépendante, et dans lequel les ressources radio sont formées par des canaux de transmission à accès multiple selon des techniques de multiplexage mixte incluant un multiplexage fréquentiel, **caractérisée en ce qu'**elle comporte des moyens (15) pour coordonner l'allocation de ressources radio pour différents services auxquels une station mobile accède simultanément, en vue d'allouer à cette station mobile, pour ces différents services, différents canaux de transmission portés par une même fréquence porteuse.

## Claims

1. A system for allocation radio resources to a mobile station in a multiservice mobile radio cellular system in which radio resource allocation for the various services is performed independently, and in which the radio resources are formed by transmission channels having multiple access using combinations of multiplexing techniques including frequency multiplexing, the system being **characterized in that** it includes coordination means (14, 15) for coordinating the allocation of radio resources for the various services accessed simultaneously by a mobile station, in order to allocate different channels carried by a single carrier frequency to the various services for said mobile station.

2. A mobile station for a multiservice mobile radio cellular system in which radio resource allocation for the various services is performed independently, and in which the radio resources are formed by transmission channels having multiple access using combinations of multiplexing techniques including frequency multiplexing, the system of claim 1, **characterized in that** it includes coordination means (14) for coordinating the allocation of radio resources for the various services accessed simultaneously by a mobile station, in order to allocate different channels carried by a single carrier frequency to the various services for said mobile station.

3. A radio access subsystem entity of a multiservice mobile radio cellular system in which radio resource allocation for the various services is performed independently, and in which the radio resources are formed by transmission channels having multiple access using combinations of multiplexing techniques including frequency multiplexing, the entity being **characterized in that** it includes coordination means (15) for coordinating the allocation of radio resources for the various services accessed simultaneously by a mobile station, in order to allocate different channels carried by a single carrier frequency to the various services for said mobile station.

## Patentansprüche

1. System zur Zuweisung von Funkkapazitäten an eine Mobilstation in einem Mobilfunk-Mehrdienstzellularsystem, bei dem die Zuweisung der Funkkapazitäten für die verschiedenen Dienste unabhängig erfolgt, und bei dem die Funkkapazitäten gebildet werden durch Übertragungskanäle mit Mehrfachzugriff gemäß Mischmultiplextechniken, die ein Frequenzmultiplex einschließen, **dadurch gekennzeichnet, dass** es Mittel (14, 15) enthält, um die Funkkapazitätszuweisung für verschiedene Dienste, auf die eine Mobilstation gleichzeitig zugreift, im Hinblick darauf zu koordinieren, dieser Mobilstation für diese verschiedenen Dienste verschiedene Übertragungskanäle zuzuweisen, die von ein und derselben Trägerfrequenz getragen werden.

2. Mobilstation für Mobilfunk-Mehrdienstzellularsystem, bei dem die Zuweisung der Funkkapazitäten für die verschiedenen Dienste unabhängig erfolgt, und bei dem die Funkkapazitäten gebildet werden durch Übertragungskanäle mit Mehrfachzugriff gemäß Mischmultiplextechniken, die ein Frequenzmultiplex einschließen, **dadurch gekennzeichnet, dass** sie Mittel (14) enthält, um die Funkkapazitätszuweisung für verschiedene Dienste, auf die eine Mobilstation gleichzeitig zugreift, im Hinblick darauf zu koordinieren, dieser Mobilstation für diese verschiedenen Dienste verschiedene Übertragungskanäle zuzuweisen, die von ein und derselben Trägerfrequenz getragen werden.

3. Funkzugangs-Untersysteminstanz eines Mobilfunk-Mehrdienstzellularsystems, bei dem die Zuweisung der Funkkapazitäten für die verschiedenen Dienste unabhängig erfolgt, und bei dem die Funkkapazitäten gebildet werden durch Übertragungskanäle mit Mehrfachzugriff gemäß Mischmultiplextechniken, die ein Frequenzmultiplex einschließen, **dadurch gekennzeichnet, dass** sie Mittel (15) enthält, um die Funkkapazitätszuweisung für verschiedene Dienste, auf die eine Mobilstation gleichzeitig zugreift, im Hinblick darauf zu koordinieren, dieser Mobilstation für diese verschiedenen Dienste verschiedene Übertragungskanäle zuzuweisen, die von ein und derselben Trägerfrequenz getragen werden.
